# EUROPEAN PATENT SPECIFICATION

(11) **EP 2 429 134 B1**
(45) Date of publication and mention of the grant of the patent: **23.03.2016**
(21) Application number: 09845720.3
(22) Date of filing: 08.12.2009
(51) Int. Cl.: G06F 17/30

(54) **METHOD AND APPARATUS FOR CHECKING AND SYNCHRONIZING DATA BLOCK IN DISTRIBUTED FILE SYSTEM**
VERFAHREN UND VORRICHTUNG ZUM PRÜFEN UND SYNCHRONISIEREN EINES DATENBLOCKS IN EINEM VERTEILTEN DATEISYSTEM
MÉTHODE ET APPAREIL DE VÉRIFICATION ET SYNCHRONISATION DE BLOCS DE DONNÉES DANS UN SYSTÈME DE FICHIERS DISTRIBUÉS

(30) Priority: 09.06.2009 CN 200910108051
(43) Date of publication of application: 14.03.2012
(73) Proprietor: ZTE Corporation, Shenzhen, Guangdong 518057 (CN)
(72) Inventor: PENG, Jie, Shenzhen Guangdong 518057 (CN); CHENG, Ning, Shenzhen Guangdong 518057 (CN); WANG, Chong, Shenzhen Guangdong 518057 (CN); XIA, Jianbo, Shenzhen Guangdong 518057 (CN); ZHANG, Bo, Shenzhen Guangdong 518057 (CN)
(74) Representative: Gervasi, Gemma
(86) International application number: PCT/CN2009/075391
(87) International publication number: WO 2010/142111

(56) References cited:
- CN-A- 1 330 828
- CN-A- 101 582 920
- WEIL S A ET AL: "CEPH: A SCALABLE, HIGH-PERFORMANCE DISTRIBUTED FILE SYSTEM", 7TH SYMPOSIUM ON OPERATING SYSTEMS DESIGN AND IMPLEMENTATION. NOVEMBER 6-8, 2006, SEATTLE, WA, USENIX ASSOCIATION, US, 6 November 2006 (2006-11-06), pages 307-320, XP001544832,
- BIN CAI ET AL: "EDRFS: An Effective Distributed Replication File System for Small-File and Data-Intensive Application", COMMUNICATION SYSTEMS SOFTWARE AND MIDDLEWARE, 2007. COMSWARE 2007. 2N D INTERNATIONAL CONFERENCE ON, IEEE, PI, January 2007 (2007-01), pages 1-7, XP031113922, ISBN: 978-1-4244-0613-5
- LING ZHAN ET AL: "Metadata Management for Distributed Multimedia Storage System", ELECTRONIC COMMERCE AND SECURITY, 2008 INTERNATIONAL SYMPOSIUM ON, IEEE, PISCATAWAY, NJ, USA, 3 August 2008 (2008-08-03), pages 443-447, XP031311831, ISBN: 978-0-7695-3258-5
- WAN JIGUANG ET AL: 'Two-level Metadata Management of a Cluster Multimedia Storage System' JOURNAL OF CHINESE COMPUTER SYSTEMS vol. 30, no. 4, 30 April 2009, XP008162733
- LI XIANGNA ET AL: 'Research and Implementation of Accelerating Metadata Access in Distributed File System' MICROPROCESSORS no. 2, 30 April 2008, XP008163934

## Description

### Technical Field

The present invention relates to the field of data storage, and more particularly, to a method and apparatus for checking and synchronizing data blocks in a distributed file system.

### Background of the Related Art

With the rapid development of a multimedia industry, more and more manufacturers choose to deploy self-developed distributed storage systems in their products due to the cost, reliability, and many other considerations, therefore, the distributed file system has been rapidly developed.

In the existing distributed file system architecture, a file is generally divided into a plurality of data blocks for storage; to ensure the robustness and disaster recovery capability of the system, the data blocks general have a plurality of backups stored in different physical positions. Thus, there is an issue of checking and synchronizing these data blocks, so as to guarantee the consistency of these data blocks, that is, guarantee that the valid data stored in the data blocks are the same. In the existing framework of the distributed file system, the checking and synchronizing these data blocks is initiated and carried out by a metadata server. If the data blocks reach a certain number, the metadata server has to waste a lot of time in the checking and synchronization of the data blocks, which affects the response speed of the user operation, and further affects the system performance. In particular, in a system such as an interactive internet protocol TV (IPTV) that has a relatively high requirements for real time and user experience, the metadata server has to spend a lot of time in the checking and synchronization of the data blocks, which will seriously affect the response speed of the user operation as well as the system performance.

Document "Ceph: A Scalable, High-Performance Distributed File System" (WEIL A E ET AL), 7TH SYMP. ON OPERATING SYSTEMS DESIGN AND IMPLEMENTATION. 6 November 2006, pages 307-320**, XP001544832, discloses a method of maintaining consistency between replicas of objects in a distributed file system having a metadata server (MDS) cluster and a plurality of Object Storage Devices.**

### Content of the Invention

The purpose of the present invention is to provide a method and apparatus for checking and synchronizing data blocks in a distributed file system to address the problem that the response speed of the user operation is seriously affected since the metadata server in the distributed file system wastes a lot of time in checking and synchronizing the data blocks in the related art.

The present invention is implemented with a method as defined in the independent claim. A preferred method for checking and synchronizing the data blocks in the distributed file system, where the distributed file system comprises a metadata server and data block servers; and the method comprises: the metadata server specifying one of the data block servers in a group as a master data block server, and the other data block servers in the same group as slave data block servers, wherein, the method further comprises:
the metadata server initiating a data block checking request to the master data block server;
the master data block server checking all data block information managed by the slave data block servers in the group of the master data block server, synchronizing according to a checking result, and then reporting the checking result and a synchronization result to the metadata server;
the metadata server updating metadata information according to the reported checking and synchronization results.

In the method, the process of the master data block server checking all the data block information managed by the slave data block servers in the group of the master data block server is:
the master data block server sending data block collection requests to the slave data block servers in the group;
the slave data block servers reporting the data block information managed by the slave data block servers to the master data block server; after the master data block server receives the data block information reported by all the slave data block servers in the group, checking the data blocks. In the method, before the step of the master data block server sending the data block
collection requests to the slave data block servers in the group, the method further comprises: the master data block server acquiring information of all the data block servers in the group from the data block checking request sent by the metadata server.

In the method, after the slave data block servers report the data block information managed by the slave data block servers to the master data block server, the master data block server recording the reported data block information to a buffer.

In the method, the checking is to check a consistency of the master data block and the slave data blocks. In the method, content to be checked is sizes and version numbers of the data blocks. In the method, the synchronizing according to the checking result is: synchronizing an inconsistent part in the master data block and the slave data blocks according to the checking result. In the method, the process of the metadata server initiating a data block checking request to the master data block server is initiated by triggering the metadata server by a timer.

Another purpose of the present invention is to provide system as defined in the independent claim, for checking and synchronizing data blocks in a distributed file system, wherein the system comprises a metadata server and data block servers; and the metadata server specifies one of the data block servers in a same group as a master data block server, and takes the other data block servers as slave data block servers; wherein, the system comprises:
a checking initiation unit, adapted for initiating a data block checking request to the master data block server;
a checking and synchronization unit, adapted for checking all data block information managed by the slave data block servers in the group of the master data block server, and synchronizing master and slave data blocks according to a checking result, and then reporting the checking result and a synchronization result to the metadata server;
a metadata information update unit, adapted for updating metadata information according to the reported checking and synchronization results.

In the method, the checking and synchronization unit comprises: a data block information collection sub-unit, adapted for sending data block collection requests to the slave data block servers in the group of the master data block server, and initiating data block checking after receiving the data block information managed and reported by all the slave data block servers.

The beneficial effect of the present invention is: only very small amount of the process are processed by the metadata server in the process of checking and synchronizing the data blocks, which only occupies very little time of the metadata server, thus guaranteeing the response speed of the metadata server to the user instruction as well as the system performance.

### Brief Description of Drawings

FIG. 1 is a structural diagram of a distributed file system provided in the related art;
FIG. 2 is a flow chart of a method for checking and synchronizing data blocks in a distributed file system in accordance with an embodiment of the present invention;
FIG. 3 is a flow chart of a specific method for checking and synchronizing data blocks in a distributed file system in accordance with an embodiment of the present invention; and
FIG. 4 is a structural diagram of an apparatus for checking and synchronizing data blocks in a distributed file system in accordance with an embodiment of the present invention.

### Preferred Embodiments of the Present Invention

In order to more clearly understand the purpose, technical scheme and advantages of the present invention, the present invention will be illustrated in further detail in combination with the accompanying drawings and embodiments in the following. It should be understood that the specific embodiments described herein is only used to explain the present invention rather than to restrict the present invention.

In the embodiments of the present invention, after the metadata server initiates a process of checking and synchronizing the data blocks, the metadata server specifies one data block server in a group of data block servers as a master data block server, the master data block server collects data block information within the group and completes the process of checking and synchronizing, and then reports the result to the metadata server. Thus, the whole process of checking and synchronizing the data blocks only takes a very small amount of time of the metadata server, thereby guaranteeing the response speed of user instructions and the system performance.

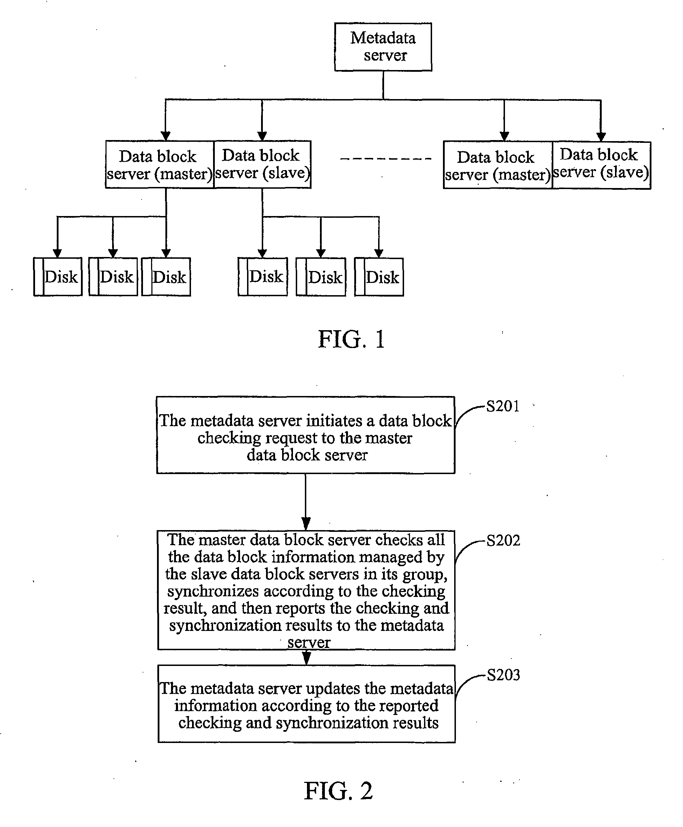

FIG. 1 is a structural diagram of a distributed file system in the related art. The distributed file system comprises the metadata server, data block servers and disks as the storage mediums. The metadata server specifies one data block server in the same group of data block servers as the master data block server, and specifies the other data block servers as the slave data block servers. The data blocks stored in the storage mediums managed by the master data block server are master data blocks, while the data blocks stored in the storage mediums managed by the slave data block servers are slave data blocks. The functions of each part in the system is as follows.

The metadata server is responsible for managing metadata information, such as file names of all the files, data blocks, and a corresponding relationship between the files and the data blocks, and so on; and providing an interface for operations such as metadata write-in and query and so on to a file accessing client.

The data block servers are responsible for interacting with the storage mediums in the local node to read and write the actual data blocks; managing the data block information stored in the storage mediums; responding a data reading and writing request of the file accessing client, reading data from the storage mediums and returning the data to the file accessing client; and reading data from the file accessing client and writing them into the storage mediums.

Data block checking is: checking the consistency of the master data blocks and the slave data blocks, and the main checking contents are the sizes and version numbers of the data blocks.

Data block synchronization is: synchronizing the data blocks that are checked as inconsistent, and the synchronization method mainly is full or partial duplication of the data blocks.

FIG. 2 is a flow chart of a method for checking and synchronizing data blocks in a distributed file system in accordance with an embodiment of the present invention. When the method is used in the above-mentioned distributed file system, the metadata server needs to specify one data block server in the same group of data block servers as the master data block server at the beginning of checking. The method comprises the following steps:
in step S201, the metadata server initiates a data block checking request to the master data block server;
in step S202, the master data block server checks all data block information managed by the slave data block servers within the group, synchronizes according to the checking result, and then reports the checking result and synchronization result to the metadata server;
in step S203, the metadata server updates the corresponding data block metadata information according to the results reported by the master data block server.

Thus, in the process of checking and synchronizing the data block information, the metadata server only initiates the checking request and updates the metadata information according to the checking result. The work to be done by the metadata server is very little and simple, thus the resources consumed by the metadata server are also very little. Therefore, the metadata server can complete the checking of the data blocks while not affect other services, that is to say, it can totally and well guarantee that, at the time of checking the data blocks, the response speed of the user instructions or other performances are not interrupted.

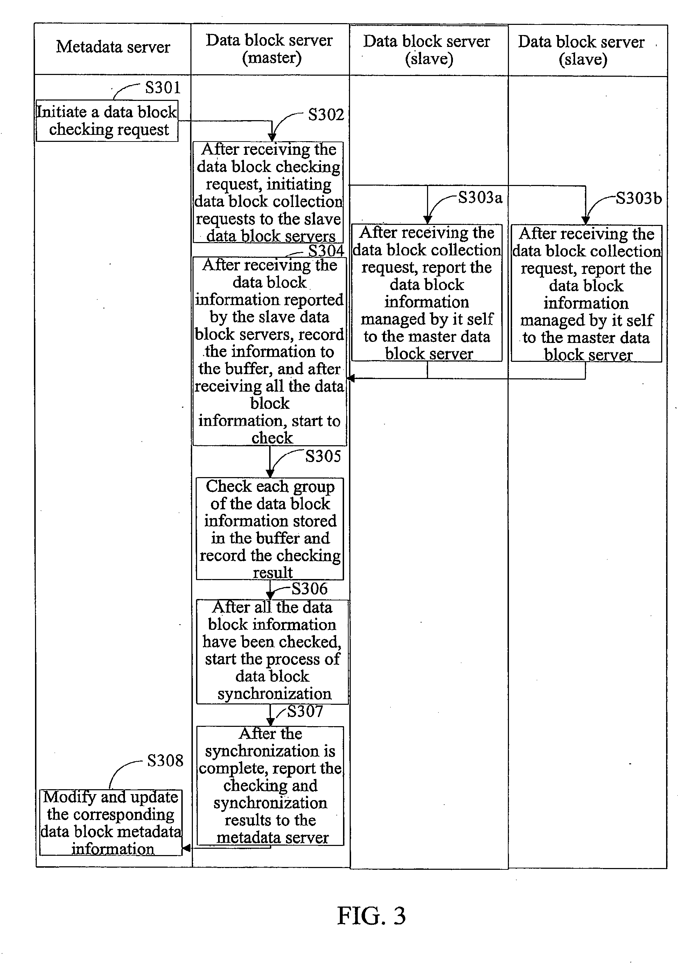

FIG. 3 is a flow chart of a specific method for checking and synchronizing data blocks in a distributed file system in accordance with an embodiment of the present invention. The metadata server is triggered by a timer of data block checking and synchronization to start the process of data block checking; the metadata server constructs the master-slave relationship table of all the disks as the storage mediums in the distributed file system; after the disk master-slave relationship table is constructed completely, the metadata server specifies the data block server, in which the master disk from a master-slave disk group is located, as the master data block server. The specific method process is as follows:
in step S301, the metadata server initiates a data block checking request to the master data block server.
In step S302, after the master data block server receives the data block checking request, it initiates data block collection requests to the slave data block servers corresponding to the master data block server.

After the master data block server receives the data block checking request sent by the metadata server, it starts to initiate the data block checking process in the local group.

The master data block server acquires the information of all the data block servers in the group from the data block checking request information sent by the metadata server, and sends the data block collection request to each slave data block server in the group.

In step S303, after each slave data block server receives the data block collection request, it reports the data block information managed by it self to the master data block server.

Those skilled in the art should understand that there can be a plurality of slave data block servers which are in the same group with the master data block server. To simplify the description, only two slave data block servers are illustrated in FIG. 3.

In step S304, after the master data block server receives the data block information reported by the slave data block servers, the master data block server records the information to the buffer, and after receiving all the data block information reported by all the slave data block servers, starts to check the data blocks.

In step S305, the master data block server checks each group of the data block information stored in the buffer and records the checking result.

The checking is mainly to check the sizes and version numbers of the data blocks.

In step S306, after all the data block information have been checked, the master data block server starts the process of data block synchronization.

The master data block server synchronizes the inconsistent part in the master and slave data blocks according to the checking result, and the practical synchronization process might relate to operations such as the duplication of the data blocks and so on.

In step S307, after the synchronization of all the data block that need to be synchronized is complete, the master data block server fulfills the process of data block checking and synchronization and reports the checking and synchronization result to the metadata server;
in step S308, the metadata server modifies and updates the corresponding data block metadata information according to the checking and synchronization result reported by each master data block server.

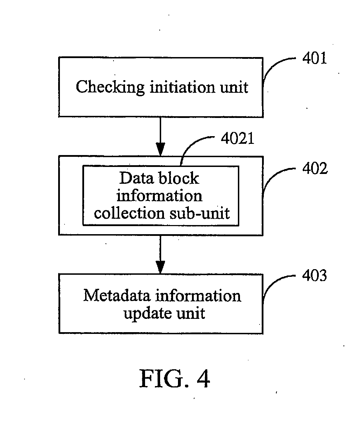

FIG. 4 is a structural diagram of a system for checking and synchronizing data blocks in a distributed file system in accordance with an embodiment of the present invention. To simplify the description, here only the part relevant to the invention is illustrated. The specific structure of the distributed file system is as above description. The system comprises:
a checking initiation unit 401, used to initiate a data block checking request to the master data block server; the specific process is described as above;
a checking and synchronization unit 402, used to check all the data block information managed by the slave data block servers which are in the same group with the master data block server, and to synchronize the master and slave data blocks according to the checking result, and then to report the checking and synchronization result to the metadata server; the specific process is described as above;
a metadata information update unit 403, used to update the metadata information according to the reported checking and synchronization result; the specific process is described as above.

The checking and synchronization unit 402 comprises a data block information collection sub-unit 4021. The data block information collection sub-unit 4021 is used to send a data block collection request to the slave data block servers which are in the same group with the master data block server, and initiate the data block checking after receiving the data block information managed and reported by all the slave data block servers; the specific process is described as above.

In the embodiments of the present invention, the burden of the metadata server can be reduced since the master data block server fulfills the process of checking and synchronizing the data blocks; the master data block server collects and then checks the data block information of the slave data block servers, thus fastening the checking speed; the master data block server acquires the information of all the data block servers in the group from the data block checking request sent by the metadata server, which can acquire the correct information of the data block servers in the group in real time; and the master data block server records the reported data block information in the buffer, so as to facilitate for the centralized cheeking.

The above description is only the preferred embodiments of the present invention, and is not intended to limit the present invention.

## Claims

1. A method for checking and synchronizing data blocks in a distributed file system, wherein the distributed file system comprises a metadata server and data block servers the data block servers forming at least one group; and the method **characterized by**:
a) the metadata server specifying one of the data block servers in a group as a master data block server, and the other data block servers in the same group as slave data block servers, wherein the data blocks stored in the storage mediums managed by the master data block server are master data blocks, while the data blocks stored in the storage mediums managed by the slave data block servers are slave data blocks, wherein, the method further comprises:
b) the metadata server initiating a data block checking request to the master data block server;
c) the master data block server:
c1) checking all data block information managed by the slave data block servers in the group of the master data block server for consistency between the master data blocks and the slave data blocks;
c2) synchronizing the data blocks which are checked as inconsistent;
c3) and then reporting the checking result and a synchronization result to the metadata server;
d) and the metadata server updating metadata information according to the reported checking and synchronization results.

2. The method of claim 1, wherein, the process of the master data block server checking all the data block information managed by the slave data block servers in the group of the master data block server is:
the master data block server sending data block collection requests to the slave data block servers in the group;
the slave data block servers reporting the data block information managed by the slave data block servers to the master data block server;
after the master data block server receives the data block information reported by all the slave data block servers in the group, checking the data blocks.

3. The method of claim 2, wherein, before the step of the master data block server sending the data block collection requests to the slave data block servers in the group, the method further comprises: the master data block server acquiring information of all the data block servers in the group from the data block checking request sent by the metadata server.

4. The method of claim 2, wherein, after the slave data block servers report the data block information managed by the slave data block servers to the master data block server, the master data block server recording the reported data block information to a buffer.

5. The method of claim 4, wherein, content to be checked is sizes and version numbers of the data blocks.

6. The method of any one of claims 1 to 4, wherein, the synchronizing according to the checking result is: synchronizing an inconsistent part in the master data block and the slave data blocks according to the checking result.

7. The method of any one of claims 1 to 4, wherein the process of the metadata server initiating a data block checking request to the master data block server is initiated by triggering the metadata server by a timer.

8. A system for checking and synchronizing data blocks in a distributed file system, wherein the system is **characterized by** comprising a metadata server and data block servers, the data block servers forming at least one group, the metadata server being configured to specify one of the data block servers in a group as a master data block server, and the other data block servers in the same group as slave data block servers; wherein the data blocks stored in the storage mediums managed by the master data block server are master data blocks, while the data blocks stored in the storage mediums managed by the slave data block servers are slave data blocks,
said system further **characterized in that**:
the metadata server comprises a checking initiation unit (401), adapted for initiating a data block checking request to the master data block server;
the master data block server comprises a checking and synchronization unit (402), adapted for checking all data block information managed by the slave data block servers in the group of the master data block server for consistency between the master data blocks and the slave data blocks, and for synchronizing master and slave data blocks which are checked as inconsistent, and then reporting the checking result and a synchronization result to the metadata server;
the metadata server further comprises a metadata information update unit (403), adapted for updating metadata information according to the reported checking and synchronization results.

9. The system of claim 8, wherein, the checking and synchronization unit comprises:
a data block information collection sub-unit (4021), adapted for sending data block collection requests to the slave data block servers in the group of the master data block server, and initiating data block checking after receiving the data block information managed and reported by the slave data block servers.

## Patentansprüche

1. Verfahren zum Prüfen und Synchronisieren von Datenblöcken in einem verteilten Dateisystem, wobei das verteilte Dateisystem einen Metadaten-Server und Datenblock-Server umfasst und die Datenblock-Server wenigstens eine Gruppe bilden und das Verfahren **dadurch gekennzeichnet ist, dass**
(a) der Metadaten-Server einen der Datenblock-Server in einer Gruppe als Master-Datenblock-Server bestimmt und die anderen Datenblock-Server in derselben Gruppe als Neben-Datenblock-Server bestimmt, wobei die Datenblöcke, die in den Speichermedien gespeichert sind, die von dem Master-Datenblock-Server verwaltet werden, Master-Datenblöcke sind, während die Datenblöcke, die in den Speichermedien gespeichert sind, die von den Neben-Datenblock-Servern verwaltet werden, Neben-Datenblöcke sind, wobei das Verfahren weiter umfasst, dass
(b) der Metadaten-Server eine Datenblock-Prüfanfrage an den Master-Datenblock-Server initiiert;
(c) der Master-Datenblock-Server
(c1) alle Datenblock-Information, die von den Neben-Datenblock-Servern in der Gruppe des Master-Datenblock-Servers verwaltet wird, auf Konsistenz zwischen den Master-Datenblöcken und den Neben-Datenblöcken prüft;
(c2) die Datenblöcke synchronisiert, die als nicht-konsistent geprüft werden; und
(c3) dann das Ergebnis der Prüfung und ein Synchronisations-Ergebnis an den Metadaten-Server berichtet; und
(d) der Metadaten-Server die Metadaten-Information entsprechend der berichteten Prüfungs- und Synchronisations-Ergebnisse aktualisiert.

2. Verfahren nach Anspruch 1, wobei die Vorgehensweise, dass der Mas-ter-Datenblock-Server die gesamte Datenblock-Information prüft, die von den Neben-Datenblock-Servern in der Gruppe des Master-Datenblock-Servers verwaltet wird, diejenige ist, dass
- der Master-Datenblock-Server Datenblock-Sammelanfragen an die Neben-Datenblock-Server in der Gruppe sendet;
- die Neben-Datenblock-Server die Datenblock-Information, die von den Neben-Datenblock-Servern verwaltet wird, an den Master-Datenblock-Server berichten;
- der Master-Datenblock-Server, nachdem er die Datenblock-Information erhalten hat, die von allen Neben-Datenblock-Servern in der Gruppe berichtet wurde, die Datenblöcke prüft.

3. Verfahren nach Anspruch 2, wobei das Verfahren vor dem Schritt, in dem der Master-Datenblock-Server Datenblock-Sammelanfragen an die Ne-ben-Datenblock-Server in der Gruppe sendet, weiter den Schritt umfasst, dass der Master-Datenblock-Server Informationen aller Datenblock-Server in der Gruppe von der Datenblock-Prüfungsanfrage erlangt, die von dem Metadaten-Server gesandt wird.

4. Verfahren nach Anspruch 2, wobei die Master-Datenblock-Server, nach-dem die Neben-Datenblock-Server die Datenblock-Information, die von den Neben-Datenblock-Servern verwaltet wird, an den Master-Datenblock-Server berichtet haben, die berichtete Datenblock-Information auf einem Zwischenspeicher aufzeichnen.

5. Verfahren nach Anspruch 4, wobei der zu prüfende Content die Größen und die Versionsnummern der Datenblöcke ist.

6. Verfahren nach irgendeinem der Ansprüche 1 bis 4, wobei das Synchro-nisieren gemäß den Prüfungsergebnissen ist: Synchronisieren eines nicht-konsistenten Teils in dem Master-Datenblock und den Neben-Datenblöcken entsprechend dem Prüfungsergebnis.

7. Verfahren nach irgendeinem der Ansprüche 1 bis 4, wobei das Verfahren, dass der Metadaten-Server eine Datenblock-Prüfungsanfrage an den Master-Datenblock-Server initiiert, initiiert wird durch Triggern des Metadaten-Servers mittels eines Zeitgebers.

8. System zum Prüfen und Synchronisieren von Datenblöcken in einem verteilten Datei-System, wobei das System **dadurch gekennzeichnet ist, dass** es einen Metadaten-Server und Datenblock-Server umfasst, wobei die Datenblock-Server wenigstens eine Gruppe bilden, wobei der Metadaten-Server derart konfiguriert ist, dass er einen der Datenblock-Server in einer Gruppe als Master-Datenblock-Server bestimmt und die anderen Datenblock-Server in derselben Gruppe als Neben-Datenblock-Server bestimmt; worin die in den Speichermedien gespeicherten Datenblöcke, die von dem Master-Datenblock-Server verwaltet werden, Master-Datenblöcke sind, während die in den Speichermedien gespeicherten Datenblöcke, die von den Neben-Datenblock-Servern verwaltet werden, Neben-Datenblöcke sind; wobei das System weiter **dadurch gekennzeichnet ist, dass**
- der Metadaten-Server eine Prüf-Initiier-Einheit (401) umfasst, die dafür angepasst ist, dass sie eine Datenblock-Prüfanfrage an den Master-Datenblock-Server initiiert;
- der Master-Datenblock-Server eine Prüf- und Synchronisations-Einheit (402) umfasst, die dafür angepasst ist, dass sie alle Daten-block-Information, die von den Neben-Datenblock-Servern in der Gruppe des Master-Datenblock-Servers verwaltet wird, auf Konsistenz zwischen den Master-Datenblöcken und den Neben-Datenblöcken prüft und Master- und Neben-Datenblöcke, die als nicht-konsistent geprüft werden, synchronisiert und dann das PrüfErgebnis und ein Synchronisations-Ergebnis an den Metadaten-Server berichtet;
- wobei der Metadaten-Server weiter umfasst: eine Metadaten-Informations-Aktualisierungs-Einheit (403), die dafür angepasst ist, dass sie Metadaten-Information gemäß den berichteten Prüf- und Synchronisations-Ergebnissen aktualisiert.

9. System nach Anspruch 8, wobei die Prüf- und Synchronisations-Einheit umfasst:
- eine Datenblock-Informationssammel-Untereinheit (4021), die dafür angepasst ist, dass sie Datenblock-Sammelanfragen an die Neben-Datenblock-Server in der Gruppe des Master-Datenblock-Servers sendet und ein Prüfen von Datenblöcken nach Empfangen der Da-tenblock-Information initiiert, die von den Neben-Datenblock-Servern verwaltet und berichtet wird.

## Revendications

1. Procédé de contrôle et de synchronisation de blocs de données dans un système de fichiers distribués, dans lequel le système de fichiers distribués comprend un serveur de métadonnées et des serveurs de blocs de données, les serveurs de blocs de données formant au moins un groupe, le procédé étant **caractérisé par** :
a) la spécification par le serveur de métadonnées de l'un des serveurs de blocs de données dans un groupe comme serveur de blocs de données maître, et des autres serveurs de blocs de données dans le même groupe comme serveurs de blocs de données esclaves, dans lequel les blocs de données stockés dans les supports de données gérés par le serveur de blocs de données maître sont des blocs de données maîtres, alors que les blocs de données stockés dans les supports de données gérés par les serveurs de blocs de données esclaves sont des blocs de données esclaves, dans lequel le procédé comprend en outre :
b) l'initiation par le serveur de métadonnées d'une demande de contrôle de blocs de données au serveur de blocs de données maître ;
c) le serveur de blocs de données maître :
c1) contrôlant toutes les informations de blocs de données gérées par les serveurs de blocs de données esclaves dans le groupe du serveur de blocs de données maître pour établir la cohérence entre les blocs de données maîtres et les blocs de données esclaves ;
c2) synchronisant les blocs de données qui sont contrôlés comme étant incohérents ;
c3) puis envoyant un rapport concernant le résultat du contrôle et un résultat de synchronisation au serveur de métadonnées ;
d) et la mise à jour par le serveur de métadonnées des informations de métadonnées en fonction des résultats de contrôle et de synchronisation rapportés.

2. Procédé selon la revendication 1, dans lequel le processus de contrôle par le serveur de blocs de données maître de toutes les informations de blocs de données gérées par les serveurs de blocs de données esclaves dans le groupe du serveur de blocs de données maître comprend les étapes suivantes :
l'envoi par le serveur de blocs de données maître de demandes de collecte de blocs de données aux serveurs de blocs de données esclaves dans le groupe ;
l'envoi d'un rapport par les serveurs de blocs de données esclaves concernant les informations de blocs de données gérées par les serveurs de blocs de données esclaves au serveur de blocs de données maître ;
après la réception par le serveur de blocs de données maître des informations de blocs de données rapportées par tous les serveurs de blocs de données esclaves dans le groupe, le contrôle des blocs de données.

3. Procédé selon la revendication 2, dans lequel, avant l'étape d'envoi par le serveur de blocs de données maître des demandes de collecte de blocs de données aux serveurs de blocs de données esclaves dans le groupe, le procédé comprend en outre : l'acquisition par le serveur de blocs de données maître d'informations de tous les serveurs de blocs de données dans le groupe à partir de la demande de contrôle de blocs de données envoyée par le serveur de métadonnées.

4. Procédé selon la revendication 2, dans lequel, après l'envoi d'un rapport par les serveurs de blocs de données esclaves concernant les informations de blocs de données gérées par les serveurs de blocs de données esclaves au serveur de blocs de données maître, le serveur de blocs de données maître enregistre les informations de blocs de données rapportées sur une mémoire tampon.

5. Procédé selon la revendication 4, dans lequel le contenu devant être contrôlé concerne les tailles et numéros de version des blocs de données.

6. Procédé selon l'une quelconque des revendications 1 à 4, dans lequel la synchronisation en fonction du résultat de contrôle est : la synchronisation d'une partie incohérente dans le bloc de données maître et les blocs de données esclaves en fonction du résultat de contrôle.

7. Procédé selon l'une quelconque des revendications 1 à 4, dans lequel le processus d'initiation par le serveur de métadonnées d'une demande de contrôle de blocs de données au serveur de blocs de données maître est initié par le déclenchement du serveur de métadonnées par un minuteur.

8. Système de contrôle et de synchronisation de blocs de données dans un système de fichiers distribués, dans lequel le système est **caractérisé en ce qu'**il comprend un serveur de métadonnées et des serveurs de blocs de données, les serveurs de blocs de données formant au moins un groupe, le serveur de métadonnées étant configuré pour spécifier l'un des serveurs de blocs de données dans un groupe comme serveur de blocs de données maître, et les autres serveurs de blocs de données dans le même groupe comme serveurs de blocs de données esclaves ; dans lequel les blocs de données stockés dans les supports de données gérés par le serveur de blocs de données maître sont des blocs de données maîtres, alors que les blocs de données stockés dans les supports de données gérés par les serveurs de blocs de données esclaves sont des blocs de données esclaves,
ledit système étant **caractérisé en ce que** :
le serveur de métadonnées comprend une unité d'initiation de contrôle (401), conçue pour initier une demande de contrôle de blocs de données au serveur de blocs de données maître;
le serveur de blocs de données maître comprend une unité de contrôle et de synchronisation (402), conçue pour contrôler toutes les informations de blocs de données gérées par les serveurs de blocs de données esclaves dans le groupe du serveur de blocs de données maître pour établir la cohérence entre les blocs de données maîtres et les blocs de données esclaves, et pour synchroniser les blocs de données maîtres et esclaves qui sont contrôlés comme étant incohérents, puis envoyer un rapport concernant le résultat de contrôle et un résultat de synchronisation au serveur de métadonnées ;
le serveur de métadonnées comprend en outre une unité de mise à jour d'informations de métadonnées (403), conçue pour mettre à jour les informations de métadonnées en fonction des résultats de contrôle et de synchronisation rapportés.

9. Système selon la revendication 8, dans lequel l'unité de contrôle et de synchronisation comprend :
une sous-unité de collecte d'informations de blocs de données (4021), conçue pour envoyer des demandes de collecte de blocs de données aux serveurs de blocs de données esclaves dans le groupe du serveur de blocs de données maître, et pour initier un contrôle de blocs de données après la réception des informations de blocs de données gérées et rapportées par les serveurs de blocs de données esclaves.
